# EUROPEAN PATENT SPECIFICATION

(11) **EP 3 766 327 B1**
(45) Date of publication and mention of the grant of the patent: **30.08.2023**
(21) Application number: 19186358.8
(22) Date of filing: 15.07.2019
(51) Int. Cl.: A01D 34/66, A01B 59/048

(54) **WORKING TOOL**
ARBEITSWERKZEUG
OUTIL DE TRAVAIL

(43) Date of publication of application: 20.01.2021
(73) Proprietor: Kverneland Group Kerteminde A/S, 5300 Kerteminde (DK)
(72) Inventor: WEBER, Björn, 5260 Odense S (DK)
(74) Representative: Murgitroyd & Company

(56) References cited:
- EP-A1- 1 444 894
- DE-A1- 19 960 659
- JP-A- 2017 035 050
- US-A- 3 791 115
- US-A- 5 060 463

## Description

The present invention relates to a working tool such as a mower unit. In particular, but not exclusively, it relates to a front mounted mower for use in alpine environments, having a plurality of rotary cutter heads for cutting a crop.

### Background to the invention

Front mounted mowers, or more generally working tools (e.g. mower, mulcher, tiller or the like) are attached via a mounting frame to a vehicle. As a general rule a mowing tool extends transversely to the direction of movement of the vehicle and has a rotor with knives or blades which extend transversely to the direction of movement of the vehicle, rotating about a horizontal or vertical axis, i.e. arranged as discs or drums side by side.

The mounting frame is preferably fixed, i.e. not freely movably mounted on the vehicle, but the work tools may be movably connected to this frame in a limited extent, e.g. with a rotational degree of freedom about a pivot axis to adapt to uneven ground and thereby avoid different mowing heights.

Known mowers for alpine applications most often have the pivot axis positioned in the middle of the machine, e.g. with a fixed three-point attachment, which limits the movement relative to a ground surface. Such machines are large and tall so that visibility for the operator is obscured.

US5060463 describes a hitching apparatus for a tractor that permits interchangeable connection of various implements.

### Summary of the invention

The present invention seeks to provide a working tool or specifically mower unit for front mounting on a vehicle which mitigates one or more of the aforesaid problems or at least provides the public with an alternative.

According to one aspect of the present invention there is provided a working tool as defined by claim 1. In practice the mower, comprised of a plurality of rotary cutters for cutting a crop, includes a mounting frame for attachment to a vehicle, from to which the mower is pivotably/rotatably mounted. The axis of this pivotal mounting is generally in line with the direction of travel.

The configuration of the mower can be described as a pendulum beam (also known as a "pendelbock") which has the advantage of providing manoeuvrability between the ground and the cutterbar of the mowing unit, where the beam serves as an in-between frame.

The invention allows for better ground adaptation, and relieves the mowing unit's mainframe and the connection points of the tractor of high stresses that would be present in a fixed construction. However, it is noteworthy that the configuration causes many forces to transmit via the connection of the auxiliary beam (to which the frame is rotatably attached). As such, this should be designed to allow for these high forces in the construction. Contrary to prior art machines, the invention provides three pivoting connection points between the vehicle and the mower unit. Two connection points are provided on a beam which mounts the mower unit frame for pendulum movement, while a third connection attaches (e.g. by a connecting rod/ball joint) the mower directly to the vehicle.

As part of this consideration the mower includes a break-back device for location on the beam directly, as a forced-over release, to mitigate the high stress loads that can risk bending the axle during pivot of the beam. Break-back devices are known in the prior art but most utilise a top link connection that can move backwards.

Another advantageous consideration of the invention is that the pivot point is moved out of centre, necessitated by the mowing units being asymmetrical, e.g. where the driveline is on one side only.

When positioning the pivot point off-centre according to the invention, movement of the asymmetric mower is compensated to move more like a symmetrical one.

Further unique advantages resulting from the invention include:
- the mower may be configured low to the ground, comparable to available machines provided for the same function, for clear view of uncut grass in front of the mower;
- a low pivot point with smaller mass distances from mainframe;
- improved reactive movability due to the beam;
- reduced complexity because of a fixed tower connection;
- the break back device is integrated with the beam.

### Brief description of the drawings

Figure 1 shows a perspective view of internal detail from the rear of a front-mounted mower;
Figure 2 shows a front elevation view of the mower;
Figure 3 shows a perspective view comparable with Figure 1, including a protective cover/skirt over the internal mechanisms;
Figure 4 shows a side elevation view of the front-mounted mower;
Figure 5 shows a rear elevation view of the mower, including a mounting beam for connection to a vehicle;
Figure 6 shows a front perspective view of the mounting beam component of the mower;
Figure 7 shows a front elevation view of the mounting beam component of the mower;
Figure 8 shows a rear perspective view of the mounting beam component of the mower;
Figure 9 shows a rear elevation view of the mounting beam component of the mower; and
Figure 10 shows a detailed perspective view of a break-back device extending directly from the mounting beam.

### Detailed description of an embodiment of the invention

The following description presents exemplary embodiments and, together with the drawings, serves to explain principles of the invention in accordance with the defined scope of claims. However, the scope of the invention is not intended to be limited to the precise details of the embodiments. Terms for components used in the description herein should be given a broad interpretation in the limit of the wording of the appended claims.

Descriptive terms should also be given the broadest possible interpretation; e.g. the term "comprising" as used in this specification means "consisting at least in part of" such that interpreting each statement in this specification that includes the term "comprising", features other than that or those prefaced by the term may also be present. Related terms such as "comprise" and "comprises" are to be interpreted in the same manner. Directional terms such as "vertical", "horizontal", "up", "down", "top", "bottom", "upper" and "lower" are used for convenience of explanation usually with reference to the illustrations and are not intended to be ultimately limiting if an equivalent function can be achieved with an alternative dimension, orientation and/or direction.

The description herein refers to particular combinations of features, however, it is envisaged that further combinations and cross-combinations of compatible features will be possible in the limit of the wording of the appended claims.

The mower shown in the drawings is a front mower that is designed to be mounted on the front of a tractor and is configured to produce a central swath that passes between the wheels of the tractor. It should be understood that the invention is not restricted to a front mower unit and may be applicable to other types of mower unit including for example rear mounted mower units or side (outrigger) mounted units. Also, the invention is not restricted to only mower units since a pendle configuration may be applicable to other devices for mounting on a vehicle.

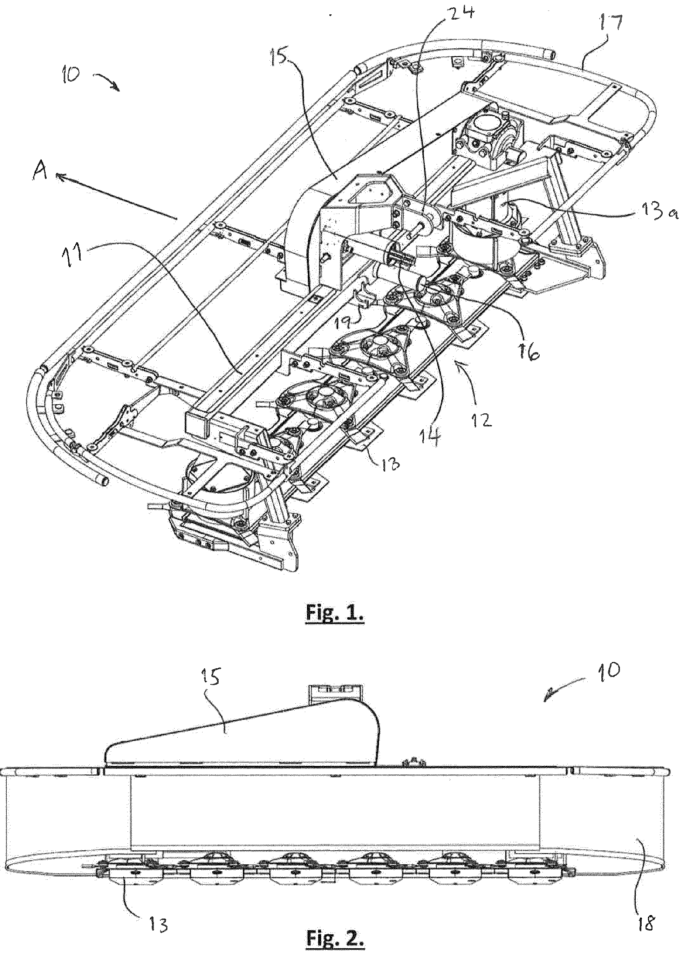

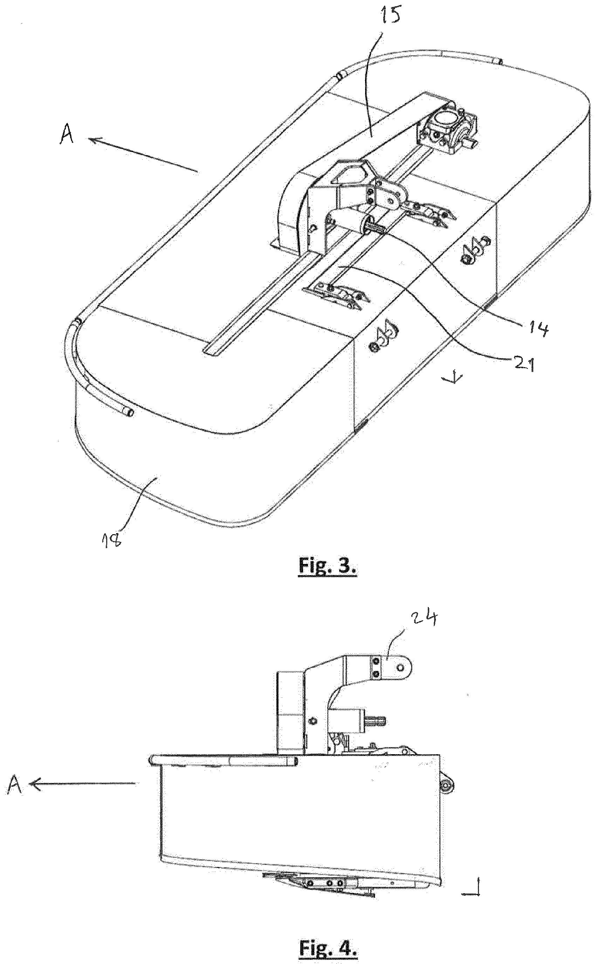

Figures 1 to 5 illustrate the general configuration of a mower unit 10 according to the invention, for front mounting to a vehicle such as a tractor. The mower 10 comprises a main frame 11 that supports a cutter bar 12 carrying a plurality of rotary cutter heads 13, for example conventional cutter discs or cutter drums equipped with knives. In this embodiment the cutter bar 12 carries six cutter heads 13, wherein the outer cutter discs 13a have crop drums mounted thereabove, to guide the cut material inwardly. The remaining cutters 13 are disc cutters. For clarification, cutter heads usually consist of a cutter disc/ drum and knives/ blades.

The cutter bar 12 extends parallel to the ground and perpendicular to a mowing direction denoted by directional arrow A. The cutter heads 13 are driven in a conventional manner from the power take-off (PTO) of the tractor via a splined drive shaft 14 to a pulley wheel and drive belt system located within a guard plate 15 to protect these components from external interference/entanglement. The mower unit 10 also includes a support frame 17 for a protective cover 18 in the form of a skirt.

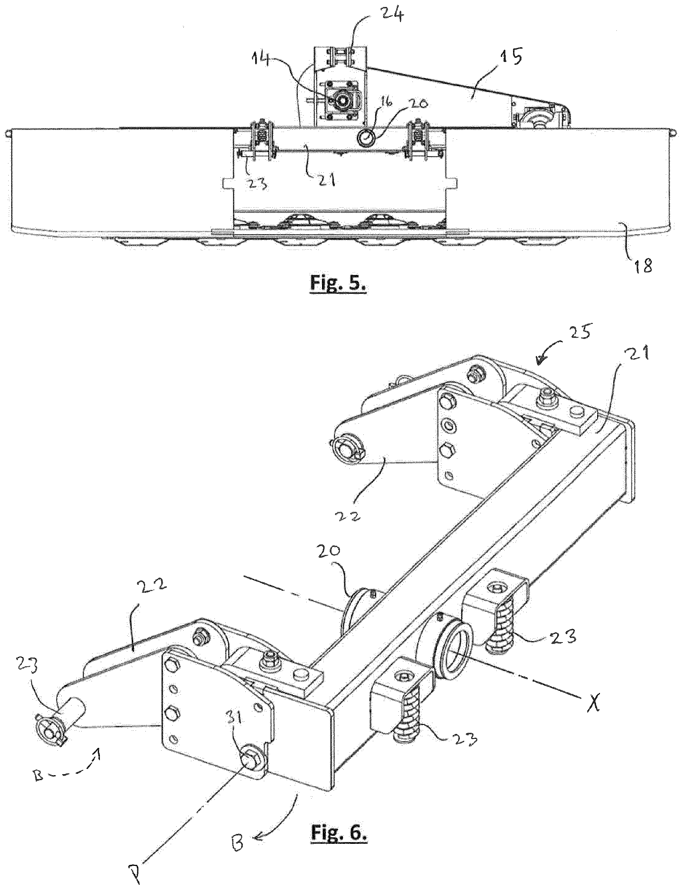

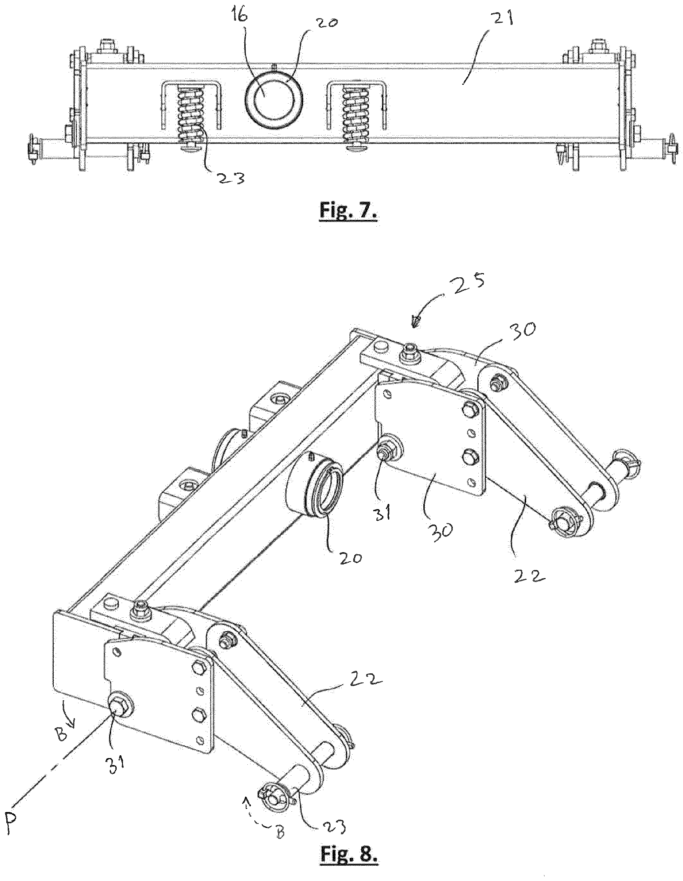

Main frame 11 is ultimately coupled to a tractor or like vehicle by a rearwardly extending shaft 16 to be received by a bearing 20 extending through a horizontally fixed mounting beam 21 (not shown in Figure 1) which in turn is mounted to the vehicle. Detail of the beam component 21 in isolation is shown by Figures 5 to 9, where a yoke bracket 22 extends therefrom for receiving a pin connection 23 therethrough to a corresponding mounting bracket on the vehicle (not seen). Bearing 20 provides an axis, denoted X, about which main frame 11 has freedom to roll/rotate via shaft 16. In practice such roll movement, like a pendulum, is limited to approximately ± 10°, and biased toward horizontal by resilient elements 32, e.g. springs either side of bearing 20. A rigid flange/shelf 19 extending rearwardly from frame 11 proximate to and overlapping underneath the spring mounts provides an abutment surface that the distal end of springs 32 (see Figures 6 and 7) can gently "bounce" against when frame 11 is contacting and rolling with the ground surface.

The pair of yoke brackets 22 provide two potentially pivoting fastening points for the mower 10 to a vehicle. A third potentially pivoting fastening point is provided by a frame-to-vehicle connection 24, also a yoke bracket configuration, extending outwardly from main frame 11 (and over shaft 14), visible in Figures 1, 3 and 4.

This third fastening point is commercially called a "top link". The top link 24 connects the mower and the tractor and may have several embodiments depending on manufacturer. Both ends of top link can have ball joints, one end can have a hook and the other end can have a ball joint. Both ends being fixed is not recommended but possible. Ball joints can be replaced by other connection means. Length may be adjustable by spindles or other actuators (e.g. mechanical, hydraulic...) but not automatically during operation.

In the present embodiment, bracket 24 is rigidly attached to frame 11 but coupled to the vehicle by a connecting rod and ball joint which accommodates the abovementioned roll movement about axis X. Likewise, a PTO shaft 14 and its connections at the vehicle and/or main frame 11 has relative movement to accommodate the pendulum movement. The connecting rod (not seen) from the tractor to ball joint may be of fixed length or adjustable/extendable by suitably actuated means. Such an extendable connecting rod would enable pitch adjustment to account for a changing slope of terrain. A ball joint may be substituted by another universal-type joint such as that provided by Rosta AG (not shown).

It will be apparent that PTO driven shaft 14 is located to be connected into a substantially central/halfway region of the main frame, passing underneath top link bracket 24. Shaft 14 mechanically couples coaxially with an internal pulley wheel for subsequently driving the cutting operation. The mower unit is externally symmetrical (e.g. see Figures 2 to 4) with shaft 14 in the centre, equidistant from the outer extent of cover 18, except where guard plate 19 extends to one side, accommodating a drive belt therewithin.

Meanwhile, it will be apparent from Figures 5 to 9 that bearing 20 through beam 21 is vertically and horizontally offset below the connection point 14 of a PTO shaft. Such offset allows the main frame 11 to roll around a centre of mass for a more sensitive pendulum movement, since mower 10 is not symmetrically balanced as a consequence of the mass of components associated with the drive means to the cutter bar 12. In the illustrated form, a drive belt (within guard plate 15)extends to one side with the associated outer gearbox and outer disc situated on that side (i.e. the right side from the perspective of a vehicle operator), making it heavier. The rolling pivot point (bearing 20) is offset toward the centre of gravity (i.e. heavy side with the driving disc 13a) enabling more sensitive movement.

The general configuration of the invention results in a low centre of gravity, i.e. the unit is positioned low to the ground, providing the best clearsight view of un-mowed area in front of the mower by looking over the belt guard 15. Weight is evenly balanced in consideration of inertia. A negligible weight differential either side of bearing 20 is desirable to exert less stress on springs 32 and the mower as a whole to provide an improved ground-following ability over mountainous/hilly conditions.

In addition to the novel configuration of three-point linkage and offset pendulum mounting point outlined above, the invention further includes a "break-back" safety feature to protect the mower in the event that it strikes an obstacle. The break-back configuration implemented with the invention, i.e. located directly with the mounting beam 21 fixed to the vehicle, is best illustrated by Figures 6, 8 and 10. A pair of so-called break-back mechanisms 25 are located proximate the yoke brackets 22 which enable connection to the vehicle (not illustrated).

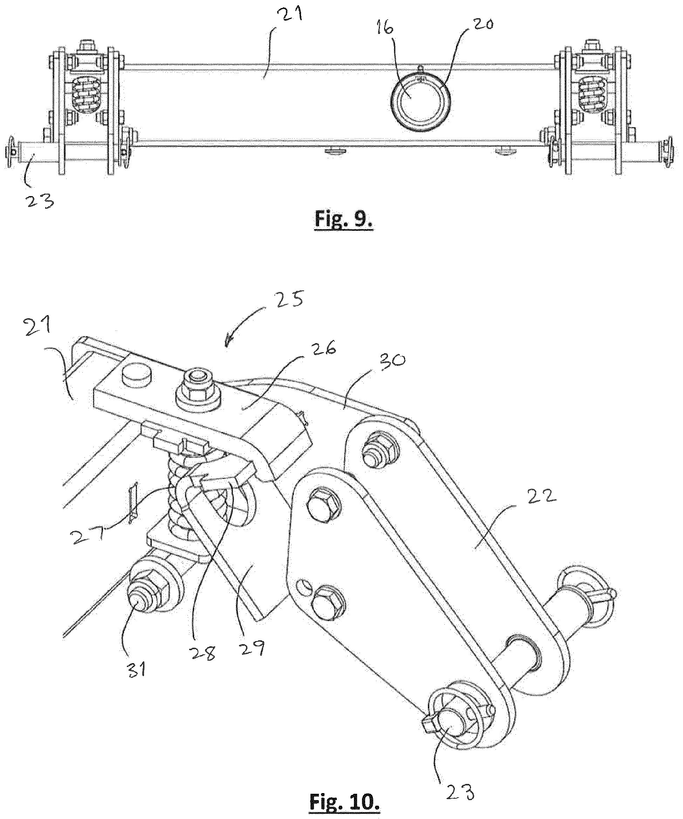

Break-back 25 is comprised of a hook plate/bar 26 which is pre-loaded with a spring force supplied by internal spring 27. Hook bar 26 is positioned to be hooked, by the spring force, over the lip 28 of a flange element 29 preferably fixedly mounted (e.g. welded) between two plates 30. The complete arrangement is shown by Figures 6 and 8, whereas the outer plate 30 has been removed in Figure 10 to provide visual access to the flange 29 and spring 27.

Plates 30 are bolted at a rearward (towards vehicle) side to the yoke brackets 22 and become integral therewith, whereas the forward side (towards direction of travel A) is pivotably connected to a flange extending from beam 21 by a break-back pin 31 for, in use, enabling rotation of the plates 30 and bracket 22 about axis P. Of course, in normal operation, movement about axis P is prevented by hook bar 26 which catches on flange 29 and holds the beam 21 securely in an operating position.

In the event of striking an obstacle (e.g. a ground-based object impacted by cutterbar 12 or cover 18) which overcomes the pre-loaded spring force, break-back mechanism 25 is designed to give way and relieve the cutterbar from the impact (while the mower is still in operation/ rotating). When the loaded spring force on hook bar 26 is exceeded an engaged notch at its distal end disengages ("sheers out") from lip 28 of flange 29 so that the beam 21 and attached main frame 11 is released to pitch backward about break-back axis P, i.e. in the swinging direction of arrow B (Figures 6 and 8). The structure may also move about pivot pin 23 at the connection to the vehicle as yoke 22 is forced upwardly. This has the effect of collapsing the cutter bar 12 toward and slightly upward (although the movement could also be a downwardly depending on geometry) relative to the vehicle upon impact with the obstacle, rather than it being a rigid/immoveable structure which would cause more damage due to momentum of the vehicle.

Such a "designed failure" break-back feature is known in the art but the present invention's break back is directly attached to the support beam 21. Normally a break-back is connected directly to a main frame, but in the case of the invention, it restricts relative movement between beam 21 and mainframe 11 while still allowing movement between the beam and the tractor connection. If the break-back were located between the mainframe and the support beam to which it is rotatably connected, the movement is not controlled, and there is a risk for destroying the pivot point or bending in-between parts.

In conclusion it will be apparent that the invention broadly relates to a working tool, such as a mower unit (10) for mounting to the front hitch and PTO connection of a tractor, including a mounting beam (21) rotatably connected to a frame (11) which carries the cutting heads (13). In practice the mounting beam (21) is connected by two spaced apart pivotable connections (22) to the vehicle and there is a connection point (24) for connecting the frame directly to the vehicle. The rotatable connection (20) between the beam and frame is located toward a centre of gravity of the frame (11), i.e. offset from the PTO connection, and enables it to roll relative to the vehicle. Such a configuration is useful in a hilly/alpine environment where there is uneven ground since the mower is self-correcting to the contour of the terrain. A break-back device (25) is preferably located between the beam (21) and vehicle such that during an impact with an obstacle the cutting equipment is disengaged before serious damage can occur either to the tractor, the mainframe or the supporting beam.

## Claims

1. A working tool for mounting to a vehicle, comprising:
a mounting beam (21), including a pair of mounting brackets (22) providing beam connection points for connection to the vehicle;
a frame (11) for carrying a tool (13), including at least one frame connection point (24) for connection to the vehicle; wherein
the frame (11) is mounted from the mounting beam (21) by a rotatable connection (16, 20), said rotatable connection located toward a centre of gravity of the frame and enabling the frame (11) to roll relative to the vehicle;wherein
each of the pair of mounting brackets (22) includes a pivotable connection for potentially pivoting the respective mounting bracket (22) relative to the vehicle.

2. The working tool of claim 1, wherein the at least one frame connection point (24) includes a joint for connection relative to the vehicle.

3. The working tool of any preceding claim, wherein the frame (11) supports an energy source or includes a power take off, PTO, connection (14) located on the frame and, in use, connectable to a PTO port of the vehicle, the rotatable connection(20) being offset below and to one side of the PTO connection.

4. The working tool of any preceding claim, wherein the at least one frame connection (24) includes an extendable connector rod for, in use, extension toward and away from the vehicle.

5. The working tool of any preceding claim, further including at least one break-back device (25) located between the rotatable connection (16, 20) and the beam connection points; or wherein the at least one break-back device (25) is integrated with a beam connection point.

6. The working tool of claim 5, wherein the break-back device (25) is comprised of a displaceable hook bar (26) engageable with a flange (29) fixed to the mounting beam (21) and a break-back pivotable connection (31) configured such that, when a pre-determined force is exceeded against a travelling direction (A) of the vehicle, the hook bar (26) is displaced from the flange (29) leaving the mounting beam (21) to move, relative to the beam connection points, about the break-back pivotable connection (31).

7. The working tool of claim 6, wherein the hook bar (26) is pre-loaded by a force.

8. The working tool of any preceding claim, including a biasing element (32) located each side of the rotatable connection (16, 20), for biasing the frame (11) back into alignment with the mounting beam (21) when, in use, said frame rolls relative to the vehicle.

9. The working tool of claim 8, wherein each biasing element (32) comprises a resilient element and an abutment element.

10. The working tool of any preceding claim, wherein the tool comprises at least one or a plurality of cutting heads (13), such that the working tool is a mower.

11. An agricultural vehicle incorporating a working tool according to any preceding claim.

## Patentansprüche

1. Ein Arbeitswerkzeug zum Montieren an einem Fahrzeug, das Folgendes beinhaltet:
einen Montagebalken (21), der ein Paar Montagehalterungen (22) umfasst, die Balkenverbindungspunkte zur Verbindung mit dem Fahrzeug bereitstellen;
ein Gestell (11) zum Tragen eines Werkzeugs (13), das mindestens einen Gestellverbindungspunkt (24) zur Verbindung mit dem Fahrzeug umfasst; wobei das Gestell (11) von dem Montagebalken (21) durch eine drehbare Verbindung (16, 20) montiert ist, wobei die drehbare Verbindung in Richtung eines Schwerpunkts des Gestells angeordnet ist und es dem Gestell (11) ermöglicht, relativ zu dem Fahrzeug zu rollen; wobei
jedes des Paares Montagehalterungen (22) eine schwenkbare Verbindung umfasst, um die jeweilige Montagehalterung (22) relativ zu dem Fahrzeug potenziell zu schwenken.

2. Arbeitswerkzeug gemäß Anspruch 1, wobei der mindestens eine Gestellverbindungspunkt (24) ein Gelenk zur Verbindung relativ zu dem Fahrzeug umfasst.

3. Arbeitswerkzeug gemäß einem der vorhergehenden Ansprüche, wobei das Gestell (11) eine Energiequelle stützt oder einen Zapfwellenanschluss (PTO(PowerTake Off)-Anschluss) (14) umfasst, der auf dem Gestell angeordnet ist und bei Verwendung mit einem Zapfwellenanschluss-Port des Fahrzeugs verbindbar ist, wobei die drehbare Verbindung (20) unter und seitlich zu der Zapfwellenantriebsverbindung versetzt ist.

4. Arbeitswerkzeug gemäß einem der vorhergehenden Ansprüche, wobei die mindestens eine Gestellverbindung (24) bei Verwendung eine ausfahrbare Verbindungsstange umfasst, um bei Verwendung zum Fahrzeug hin und davon weg ausgefahren zu werden.

5. Arbeitswerkzeug gemäß einem der vorhergehenden Ansprüche, das ferner mindestens eine Rückfederungsvorrichtung (25) umfasst, die zwischen der drehbaren Verbindung (16, 20) und den Balkenverbindungspunkten angeordnet ist; oder wobei die mindestens eine Rückfederungsvorrichtung (25) in einen Balkenverbindungspunkt integriert ist.

6. Arbeitswerkzeug gemäß Anspruch 5, wobei die Rückfederungsvorrichtung (25) aus einem verschiebbaren Hakenriegel (26) besteht, der in einen Flansch (29), der an dem Montagebalken (21) befestigt ist, und eine schwenkbare Rückfederungsverbindung (31) eingreifen kann und so konfiguriert ist, dass, wenn eine vorbestimmte Kraft gegen eine Fortbewegungsrichtung (A) des Fahrzeugs überschritten wird, der Hakenriegel (26) von dem Flansch (29) versetzt wird, was es dem Montagebalken (21) gestattet, sich relativ zu den Balkenverbindungspunkten um die schwenkbare Rückfederungsverbindung (31) zu bewegen.

7. Arbeitswerkzeug gemäß Anspruch 6, wobei der Hakenriegel (26) durch eine Kraft vorbelastet ist.

8. Arbeitswerkzeug gemäß einem der vorhergehenden Ansprüche, das ein vorspannendes Element (32) umfasst, das auf jeweils einer Seite der drehbaren Verbindung (16, 20) angeordnet ist, um das Gestell (11) wieder in Ausrichtung mit dem Montagebalken (21) vorzuspannen, wenn das Gestell bei Verwendung relativ zu dem Fahrzeug rollt.

9. Arbeitswerkzeug gemäß Anspruch 8, wobei jedes Vorspannelement (32) ein federndes Element und ein Anlageelement beinhaltet.

10. Arbeitswerkzeug gemäß einem der vorhergehenden Ansprüche, wobei das Werkzeug mindestens einen oder eine Vielzahl von Schneideköpfen (13) beinhaltet, sodass das Arbeitswerkzeug ein Mäher ist.

11. Ein landwirtschaftliches Fahrzeug, das ein Arbeitswerkzeug gemäß einem der vorhergehenden Ansprüche integriert.

## Revendications

1. Un outil de travail destiné à être monté sur un véhicule, comprenant :
une poutre de montage (21), incluant une paire de supports de montage (22) fournissant des points de raccordement de poutre destinés au raccordement sur le véhicule ;
un châssis (11) destiné à porter un outil (13), incluant au moins un point de raccordement de châssis (24) destiné au raccordement sur le véhicule ; où le châssis (11) est monté à partir de la poutre de montage (21) par un raccordement rotatif (16, 20), ledit raccordement rotatif étant situé vers un centre de gravité du châssis et permettant au châssis (11) de rouler relativement au véhicule ; où chaque support de la paire de supports de montage (22) inclut un raccordement pivotant destiné à faire potentiellement pivoter le support de montage (22) respectif relativement au véhicule.

2. L'outil de travail de la revendication 1, où l'au moins un point de raccordement de châssis (24) inclut une articulation destinée au raccordement relativement au véhicule.

3. L'outil de travail de n'importe quelle revendication précédente, où le châssis (11) supporte une source d'énergie ou inclut un raccordement de prise de force, PTO, (14) situé sur le châssis et, lors de l'utilisation, pouvant être raccordé à un port de PTO du véhicule, le raccordement rotatif (20) étant décalé en dessous et sur un côté du raccordement de PTO.

4. L'outil de travail de n'importe quelle revendication précédente, où l'au moins un raccordement de châssis (24) inclut une tige de raccordement extensible destinée, lors de l'utilisation, à se rapprocher et s'éloigner par extension du véhicule.

5. L'outil de travail de n'importe quelle revendication précédente, incluant en outre au moins un dispositif de dégagement (25) situé entre le raccordement rotatif (16, 20) et les points de raccordement de poutre ; ou bien où l'au moins un dispositif de dégagement (25) est intégré à un point de raccordement de poutre.

6. L'outil de travail de la revendication 5, où le dispositif de dégagement (25) est constitué d'une barre à crochet (26) déplaçable pouvant se mettre en prise avec une bride (29) fixée à la poutre de montage (21) et d'un raccordement de dégagement (31) pivotant configuré de telle sorte que, lorsqu'une force prédéterminée est dépassée à l'encontre d'une direction de progression (A) du véhicule, la barre à crochet (26) est déplacée depuis la bride (29) laissant la poutre de montage (21) bouger, relativement aux points de raccordement de poutre, autour du raccordement de dégagement (31) pivotant.

7. L'outil de travail de la revendication 6, où la barre à crochet (26) est pré-chargée par une force.

8. L'outil de travail de n'importe quelle revendication précédente, incluant un élément de sollicitation (32) situé de chaque côté du raccordement rotatif (16, 20), destiné à solliciter le châssis (11) pour qu'il revienne en alignement avec la poutre de montage (21) lorsque, lors de l'utilisation, ledit châssis roule relativement au véhicule.

9. L'outil de travail de la revendication 8, où chaque élément de sollicitation (32) comprend un élément résilient et un élément de butée.

10. L'outil de travail de n'importe quelle revendication précédente, où l'outil comprend au moins une tête de coupe ou une pluralité de têtes de coupe (13), de telle sorte que l'outil de travail est une tondeuse.

11. Un véhicule agricole incorporant un outil de travail selon n'importe quelle revendication précédente.
